# EUROPEAN PATENT SPECIFICATION

(11) **EP 4 040 672 B1**
(45) Date of publication and mention of the grant of the patent: **06.08.2025**
(21) Application number: 21178747.8
(22) Date of filing: 10.06.2021
(51) Int. Cl.: H02S 20/23, F24S 25/613

(54) **MOUNTING HOOK AND MOUNTING SYSTEM FOR PANELS ON A PITCHED ROOF HAVING ROOF TILES**
MONTAGEHAKEN UND MONTAGESYSTEM FÜR PLATTEN AUF EINEM SCHRÄGDACH MIT DACHZIEGELN
CROCHET DE MONTAGE ET SYSTÈME DE MONTAGE POUR PANNEAUX SUR UN TOIT INCLINÉ DOTÉ DE TUILES

(30) Priority: 05.02.2021 EP 21155502
(43) Date of publication of application: 10.08.2022
(73) Proprietor: Solyco Technology GmbH, 12205 Berlin (DE)
(72) Inventor: Podlowski, Lars, Berlin (DE)
(74) Representative: Eisenführ Speiser

(56) References cited:
- DE-A1- 10 246 935
- DE-A1- 2 433 869
- DE-U1- 20 116 814
- DE-U1- 20 204 963
- DE-U1- 202004 008 499
- DE-U1- 29 719 513
- JP-A- H10 183 898

## Description

### FIELD OF THE INVENTION

The present invention is related to a mounting hook for use in mounting a solar panel on a pitched roof having roof tiles on horizontal roof battens in a shingled arrangement. It is also related to a mounting system for mounting a solar panel on such a roof. It further relates to a roof arrangement comprising a pitched roof having roof tiles arranged in a shingled arrangement on a plurality of parallel, horizontal roof battens and least one solar panel mounted on the roof. It also relates to a method for installing a mounting hook and to a method for installing a solar panel.

### BACKGROUND OF THE INVENTION

Many mounting systems are known for mounting solar panels that include photovoltaic (PV) modules onto rooftops. Criteria for selection of a particular rooftop mounting system include ease and pace of installation, flexibility of the mounting system for use with different roof types, number of parts required, structural complexity of the required parts, cost of installation, and amount of risk of structural damage for the roof top and the underlying structures ensuring static stability of the roof.

Particular requirements must be considered for tiled roofs. Roof tiles are roofing pieces shaped for use in a shingled arrangement. Roof tiles are 'hung' from the framework of a roof. That is, the tiles are usually hung in horizontal rows on parallel roof battens in a shingled arrangement, i.e., with each ridge side row of tiles overlapping the neighboring eave side row of tiles below it to exclude rainwater. Often rooted in local traditions, roof tiles come in different shapes and materials and as such also include shingles or shakes. Roof tiles may be made from any kind of material, including ceramics, terracotta, slate, clay, stone, concrete, metal, plastic, or wood.

Known mounting systems for tiled roofs use mounting rails that are fixed to the roof for accommodating the solar panels. Mounting rails are typically made of a metal material and have a rather complex shape or rail profile to enable a fixation of the mounting rail to the roof and at the same time a fixation of the solar panels to the mounting rail. For fixing the mounting rails on the tiled roof, different tile roof hook styles suited for different tile types have been developed. The fixation of a tile roof hook on a tiled roof typically includes removing a tile at a desired installation point to gain access to a rafter, fixing a tile roof hook to the rafter in a desired position by sinking several screws, and reinstalling the overlying tile, often after processing the roof tile to allow the mounting tile roof hook to pass, or even replacing the overlying tile.

Known installation kits of a mounting system additionally include a variety of small parts such as rail splices for aligning neighboring rails, and different clamps for mechanically interconnecting horizontally neighboring solar panels or fixing ridge side end panels and eave side end panels.

DE 20 2004 008 499 U1 discloses a fastening device for fastening at least one solar collector and/or photovoltaic module to a roof, in particular a pitched roof, having rafters and/or roof battens as well as a covering, wherein the fastening device is formed from at least one hook, in particular a tiling hook, resting on the roofing (e.g. roofing tiles) and a fastening bracket which can be fastened thereto.

DE 102 46 935 A1 discloses a fastening system for fixing solar collectors, solar cells and other objects for roof covers of sloping roofs that has adjustable height levels of a roof anchor and/or a compensation rail, which is able to provide the required exit height from the roof coverings and the suitable angle suitable for the roof covering on sloping or pitched roofs with different roof battens and roof coverings, in order to fasten solar collectors, solar cells or other objects on it.

DE 201 16814 U1 discloses a bracket for fixing roof accessories such as roof hooks, snow guard supports, steps and the like on inclined roofs, with a support leg for receiving and fastening the roof accessory element, which extends above a roof covering element, for example a tile, slab or the like, in the direction of inclination of the roof, and with a fastening member for fixing the supporting leg to a roof substructure of the roof. The fastening member, which is approximately U-shaped in section, engages over the head end of the roofing element and the roof substructure supporting the roofing element, for example a roof batten, and ends below the roof substructure in a longitudinal leg which runs essentially parallel to the supporting limb and carries or forms at least one securing element, which rests against the roof substructure in a force-locking and/or form-locking manner.

DE 297 19 513 U1 discloses a fastening system for mounting solar modules on conventionally tiled roofs. The solar module, the length of which corresponds approximately to the cover height of a (approx. 33 cm), is held in two or more clamps, which on the one hand hold the clamps which, on the one hand, accommodate the solar module and on the other hand grip around one roof tile each.

DT 2433 869 A1 discloses a stationary device for walking on roofs covered with tiles laid on rafters and transverse battens tiles laid on rafters and transverse battens, with a hook engaging between two tiles from below, on a rafter and on a batten.

JP10-183898 A discloses a fixing device for a roof-installed object interposed between two upper and lower tiles that partially overlap. The fixing device for a roof-installed object comprises: a mounting portion that is mounted at one end on an end of an upper tile and to which a roof-installed object is mounted, and a fixing portion that is mounted on a roof foundation at the other end.

DE 202 04 963 U1 discloses a fastening device for components, in particular collectors, on roofs, with a roof anchor, which is for engaging behind a roof batten and for supporting the component. The roof anchor is provided with at least one hollow chamber.

### SUMMARY OF ASPECTS OF THE INVENTION AND THEIR EMBODIMENTS

The present invention relates to a mounting hook as defined in independent claim 1. Furthermore, the present invention relates to a mounting system as defined in independent claim 9 and to a roof arrangement as defined in independent claim 12. The present invention also relates to a method for installing a mounting hook according to claim 13 and to a method for installing a solar panel on a pitched roof having roof tiles on horizontal roof battens in a shingled arrangement defined in claim 14. Preferred embodiments are defined in the dependent claims.

It would be desirable to enable an easier installation of solar panels on a tiled roof and to provide a mounting system that requires fewer parts for installation.

According to a first aspect of the present invention and according to claim 1 a mounting hook for use in mounting a solar panel on a pitched roof having roof tiles on horizontal roof battens in a shingled arrangement is provided. The mounting hook comprises a ridge-side batten-hook portion and an eave-side solar panel mounting portion. The batten-hook portion comprises a passing portion made of a flat profile, for passing, after installation on the tiled roof, through an overlap region between an eave-side roof tile and a ridge-side roof tile overlapping the eave-side roof tile in their shingled arrangement. The batten-hook portion further comprises a hook portion in ridge-side continuation of the passing portion. The hook portion has a stepped shape for gripping around a ridge-side edge of the eave-side roof tile and for gripping around a ridge-side back edge of the roof batten used for mounting the eave-side roof tile.

The solar panel-mounting portion comprises a ridge-side clamp for gripping around a ridge-side edge of the panel to be mounted, and an eave-side clamp arranged at a distance from the ridge-side clamp in a ridge-to-eaves direction, for gripping around and supporting an eave-side edge of the solar panel to be mounted.

In a first alternative the mounting hook according to the invention as defined in claim 1 is an integrally formed and strip-shaped piece. The mounting hook can thus be provided as one piece coming in different standard lengths to accommodate the mounting of solar panels with different heights.

In a second alternative the mounting hook according to the invention as defined in claim 1 is provided in two separate pieces that have mutually engaging coupling elements for fixing the two pieces to each other. A first integrated piece of the mounting hook is formed by a ridge side part of the solar-panel mounting portion including the ridge side clamp and by the passing portion. An eave-side part of the solar-panel mounting portion including the eave-side clamp and a beam of suitable length that is shorter or longer in different versions form a second integrated piece.

The coupling elements of the two separate pieces are designed to allow a releasable coupling in one embodiment. A loadable and therefore suitable coupling mechanism of this type is for instance a thread-and-bolt connection. In other embodiments, the coupling elements are designed to allow establishing a non-detachable connection between the two pieces. A selection of the suitable pieces to be connected for a given application case and the establishing of the connection between the two pieces may be made in preparation of the installation of the mounting hook, for instance on the premises of the installer, or at the installation site.

In such embodiments, it is typically only the solar-panel mounting portion or a part of it that advantageously comes in different lengths to be selected from for a given field application with a given height of the selected type of solar panel. The passing portion may also be provided in different variants, if a variance of the dimensions of roof tiles and roof battens available on the market requires it. Currently, however, the variance is low so that providing a single version of the passing portion appears sufficient.

The mounting hook of the present invention provides a particularly simple and at the same time functionally comprehensive tool for mounting a solar panel on a pitched roof having roof tiles in a shingled arrangement on horizontal roof battens. It makes obsolete the requirement of using screws for fixation of a mounting hook on the rafters of the roof structure. Instead of relying on such a traditional way of fixation on a rafter, the mounting hook has a ridge-side batten-hook portion that is step-shaped for gripping around a ridge-side edge of the eave-side roof tile and for gripping around a ridge-side back edge of the roof batten used for mounting the eave-side roof tile. This way, the mounting hook can be hooked up to this roof batten, and the roof battens are used to transfer the load of solar panels to be mounted to the roof structure. A part of the load of the solar-panels in a mounted state is thus transferred via the mounting hook to the roof battens, while another part is transferred via the mounting hook to the roof tiles. The mounting hook is particularly shaped to grip around the ridge-side edge of the eave-side tile in order to avoid transferring the load to the tile and to instead establish a load transfer for the weight of the solar panels to the roof batten.

Furthermore, the invention is based on the recognition that, seen over the entirety of constructions of pitched roofs having roof tiles, the horizontal roof batten does not exhibit much, if any, variation from roof to roof. Specifically, the roof battens in all the different roof constructions hardly differ in shape and cross-sectional dimensions, in particular with regard to their cross-sectional profile. The roof batten typically has a rectangular cross sectional profile with extensions of 60 x 40mm. Only the spacing between the horizontal roof battens is variable within narrow limits from roof to roof and mostly ranges between 320 mm and 380mm, depending on the type of roof tile used. Therefore, by using the horizontal roof battens for mounting the mounting hook to the roof structure, the mounting hook of the present invention achieves the further advantage that it is universally suited for use many different types of pitched roofs.

Furthermore, the mounting hook renders obsolete much of the hardware expenditure required by known mounting systems for fixation of the mounting system itself to the underlying roof structure. As such, the mounting hook of the present invention advantageously integrates various functionality of different hardware elements of known systems in a single piece of hardware.

A further advantage of the mounting hook is that it can be mounted to the roof in a particularly simple and fast way. This advantageous mounting process will be disclosed in the following as an independent second aspect of the present invention. The following disclosure of this particularly simple method of installing the mounting hook thus at the same time serves to illustrate an additional advantage enabled by the structure of the mounting hook.

Thus, according to a second aspect of the present invention a method for installing a mounting hook according to the first aspect on a pitched roof having roof tiles on horizontal roof battens in a shingled arrangement is provided. The method comprises:
- selecting a pair of overlapping roof tiles formed by an eave-side roof tile and by a ridge-side roof tile for installation of the mounting hook;
- lifting an eave-side edge of the ridge-side roof tile up from the eave-side roof tile;
- turning the mounting hook sideways and passing the batten-hook portion of the mounting hook underneath the lifted ridge-side roof tile and over the eave-side roof tile;
- subsequently turning the mounting hook back sideways and pulling it towards the eave, thereby engaging the mounting hook by gripping around a ridge-side edge of the eave-side roof tile and gripping around a ridge-side back edge of that roof batten used for mounting the eave-side roof tile.

The method of the second aspect of the present invention allows an installer of the mounting hook of the first aspect a particularly fast and simple installation of the mounting hook during in the course of installing a mounting system for solar panels to an underlying pitched roof structure carrying roof tiles. In comparison with known methods for installing a mounting hook of a mounting system for solar panels on a pitched roof, the method saves a large amount of time. In particular, the method does not require removing tiles from their position in order to fix the mounting hook to the roof structure. Instead, an eave-side edge of the respective ridge-side roof tile only needs to be lifted temporarily without detaching the ridge-side portion of this tile from the roof batten on which it is hung. This allows passing the batten-hook underneath the lifted ridge-side roof tile and over the eave-side roof tile. While the mounting hook is pushed upwards underneath the lifted ridge-side roof tile, it is turned sideways, i.e., the mounting hook is held turned on one of its sides, in order to keep the space requirement of the mounting hook to a minimum while passing underneath the ridge-side roof tile. Once the batten-hook portion has passed the batten to which it shall be hooked, i.e., the batten on which the eave-side roof tile is hung, the mounting hook is turned back sideways, i.e., turned in the opposite direction back to its original orientation, and is subsequently pulled towards the eave. This pulling motion engages the mounting hook by letting it grip around a ridge-side edge of the eave-side roof tile and around a ridge-side back edge of that roof batten which is used for mounting the eave-side roof tile. The overall process requires about 20 seconds at most per mounting hook to be fixed. No tools are required to install the mounting hook. The installation can be accomplished by hand alone.

For clarity, the following explains a few terms used herein. The term ridge-side portion refers to a portion that is to be arranged closer to the ridge of a roof than other portions when installed on a pitched roof. In other words: a ridge side portion is found at a higher, more distant level from the ground after installation. In contrast, an eave-side portion is a portion to be arranged closer to the eave of a roof than other portions when installed on a pitched roof. In other words, an eave-side portion is found at a lower level, a level that is closer to ground after installation.

In one embodiment of the mounting hook, the batten-hook portion comprises a combination of an L-shaped portion and a Z-shaped portion. This combination advantageously integrates the functions of passing through the overlap region between the eave-side roof tile and the ridge-side roof tile, of gripping around a ridge-side edge of the eave-side roof tile, and of gripping around a ridge-side back edge of the roof batten used for mounting the eave-side roof tile.

In this embodiment, the L-shaped portion comprises a long L-bar and a short L-bar. The short L-bar is connected to a first Z-bar of the Z-shaped portion, which suitably extends perpendicularly to the short-L-bar, and substantially parallel and opposite to the long L-bar. The Z-shaped portion further comprises a second Z-bar, which is substantially parallel to the first Z-bar, and a middle Z-bar connecting the first and second Z-bars. This creates the stepped shape of the hook portion. For correctly interpreting the term "substantially parallel", a slight inclination smaller than 10 degrees between the first and second Z-bars may be provided to improve the gripping without departing from the meaning of "substantially parallel", but other embodiments have no such inclination, i.e. 0 degrees between the first and second Z-bars.

As to the functions assumed by the different sections of this geometry of the batten-hook portion, the passing portion thus includes the long L-bar. Regarding a suitable length extension of the passing portion to perform this function, the passing portion is to extend lengthwise substantially completely in the overlap region of the given pair of ridge-side and eave-side roof tile in their shingled arrangement. The length of the passing portion thus is suitably selected to span at least the distance between the ridge-side edge of the eave-side (lower) roof tile, which the hook portion grips around after installation, and an eave-side edge of the ridge-side (upper) roof tile, from which the mounting hook visibly extends further downwards in the direction of the eave with its solar panel mounting portion.

As mentioned, the hook portion assumes the function of gripping around a ridge-side edge of the eave-side roof tile and for gripping around a ridge-side back edge of the roof batten used for mounting the eave-side roof tile. The tile-gripping portion of the hook portion is formed by the short L-bar and the first Z-bar that extends opposite the passing portion from an end of the short L-bar.

The batten-gripping portion is formed by the middle Z-bar and the second horizontal Z-bar that extends opposite the passing portion from an end of the middle Z-bar. Here, the length of the middle Z-bar is suitably selected to allow it to sit properly on the roof batten.

The robust design of the solar panel mounting portion using two clamps is suited to accommodate the specifications of required resistance against lifting forces exerted by wind. The mounting hook of these embodiments is particularly suited for solar panels that are fabricated using a glass-backsheet technology or a double-glass technology, but also any other stiff solar module design. Solar panels of a double-glass technology have solar cells arranged between two glass panes and are particularly stable, suffer less degradation and thus have a very long lifespan. Solar panels made in glass-foil technology have solar cells behind a single glass plate and typically arranged on or embedded in a thin synthetic laminate.

The solar-panel mounting portion of the mounting hook can be designed to accommodate a desired width and height of solar panels. At least two mounting hooks are required for mounting a solar panel. Typical extensions of a suitable solar panel to be held by two mounting hooks are 0.8 to 1.2 meters in width. Wider solar panels can be mounted using more than two mounting hooks. The solar-panel mounting portion of some embodiments has a length corresponding to that of a roof tile, typically about 350 mm, thus allowing the mounting of a solar panel with a corresponding height by arranging the ridge-side clam and the eave-side clamp with a distance from each other that accommodates this height.

Higher solar panels can be mounted by providing the mounting hooks with a corresponding length of the solar-panel mounting portion and with clamps at a corresponding distance, suitably in units of roof tile length. For instance, mounting hooks with a length of the solar-panel mounting portion corresponding to the length of two tiles in their shingled arrangement in the ridge-to-eave direction can be used and mounted in only every second row of roof tiles, thus allowing to accommodate solar panels of about 700 mm in height. A suitable thickness of solar panels to be mounted in the solar-panel mounting portion is typically between 4 and 6 mm, in one embodiment between 5 and 5.5 mm.

In preferred embodiments of the mounting hook, the solar-panel mounting portion comprises a front support face that faces the panel to be mounted and that is supported by least one spacer of the mounting hook, which extends on a back side of the panel-mounting portion to establish an elevation of the panel to be mounted from a supporting roof tile. A length of the at least one spacer and the achieved elevation of the panel can be used to fit an electrical connector underneath the solar panel mounting portion. The elevation, measured as a distance between a back side of the front support face and the supporting roof tile is suitably between 15 and 40 mm, preferably between 25 and 35 mm.

The solar-panel mounting portion of the mounting hook in some embodiments comprises an integrally formed eave-side connection means for fixing the mounting hook at an adaptable position in ridge-to-eaves direction to a next neighboring mounting hook to be arranged in the eave-side direction. The connection means may be arranged on the back side (i.e., the side that is to face the roof tile) of the solar-panel mounting portion, or on a side face, or on two opposite side faces of the solar-panel mounting portion. The eave-side connection means is arranged near the eave-side clamp. In a first variant of this embodiment, the connection means comprises integrally formed rails that extend in ridge-to-eaves direction along a respective section of the opposite side faces and that are shaped to engage with a slider-shaped head of a fixation means, for variably positioning the fixation means on the back side of the panel-mounting portion in the ridge-to-eave direction to adapt to a given installation situation. This variability allows the mounting hook to be used universally for a wide range of roof tile types differing in their length and thickness. Preferably, the length of the rails is selected to accommodate for a variability in the spacing between the horizontal roof battens from roof to roof. A suitable length of the rails in the ridge-to-eave direction is between 10 and 70 mm, preferably 60 mm. The length of roof tiles mostly ranges between 320 mm and 380mm, depending on the type of roof tile used.

The fixation means is not part of the mounting hook itself, but typically the only extra piece to be used in a mounting system comprising mounting hooks according to the invention. A suitable fixation means for engaging with the rails of the mentioned embodiment has the slider-shaped head and may further comprise a bolt or a mounting clip for connecting the given mounting hook to the next neighboring mounting hook. The adaptability is suitably in a range higher than 20mm and smaller than 100mm in the two opposite directions that are parallel to the length extension of the roof battens and in the two opposite directions perpendicular to the planes of the solar panels to be mounted.

In another variant of this embodiment of the mounting hook, the panel-mounting portion further comprises an integrally formed ridge-side connection means near the ridge-side clamp, for fixing the mounting hook to a next neighboring mounting hook to be arranged in the ridge-side direction. The ridge-side connection means forms a counter piece for connecting to the eave-side connection means of the next neighboring mounting hook in the ridge-side direction. The ridge-side connection means of one embodiment also comprises integrally formed rails extending, however, in a vertical direction pointing from a supporting roof tile towards the panel to be mounted, and shaped to engage with a slider of a mounting clip, and a sequence of edges extending in parallel to the panel to be mounted at different vertical distances from it, on or in a ridge-side face of the panel mounting portion, for engaging with a mounting clip at an adaptable distance from the panel.

In other embodiments of the mounting hook, the panel-mounting portion comprises a bore that extends, near the eave-side clamp, from the front support face of the panel-mounting portion through the back side of the panel-mounting portion, for accommodating a fixation means that reaches through the bore and into to a next neighboring mounting hook to be arranged in the eave-side direction.

The mounting hook may be made from different materials in different embodiments. Particularly suitable materials are plastics, in particular Polypropylene (PP) or Polyamide (PA). A glass filling may be used to increase stiffness and creep resistance. These materials have the advantage that the mounting hook can be fabricated by a molding technique, such as injection molding. They also provide stability over a period of at least 25 years and are suited for use in typical temperature regimes ranging between -40°C and +85°C. They can be made weatherproof, insensitive to UV radiation and resistant against chemical agents such as ozone, ammonium, or salty water. The are also resistant against biological agents such as mould, fungal infestation etc. Other suitable materials for fabrication of the mounting hook include metals, which also allow using a casting or molding technique. Aluminum is a particularly suited metal. In other embodiments, the mounting hook is a combination plastic and metal material sections. In one such embodiment, the batten-hook portion is made from a metal to provide particular mechanical stability, whereas the solar-panel mounting portion is made from a plastic. The sections can be connected by known techniques, such as gluing using an adhesive, by riveting, by a thermal joining technique, or by a hybrid technique combining at least two connection techniques.

A second aspect of the present invention is formed by a mounting system for mounting a panel on a pitched roof having roof tiles on horizontal roof battens in a shingled arrangement. The mounting system comprises two or more mounting hooks according to the first aspect of the invention or any of its embodiments.

The mounting system of the second aspect is universally suited for mounting solar panels on almost any tilted roof. The versatility of the mounting system is based, among others, on the recognition that a modular mounting system on a per-panel basis provides a very high degree of adaptability to a given type of tiled roof. Two to four mounting hooks are typically sufficient to mount a solar panel, depending on its horizontal extension. Furthermore, as explained previously, the universal applicability of the mounting system of the second aspect is based on the recognition that the only common structural element that does not exhibit much, if any, variability from roof to roof is the horizontal roof batten. The roof batten typically has a rectangular cross sectional profile with extensions of 60 x 40mm. The mounting system makes use of this recognition by using the roof batten as the load interface that accepts the load of the mounted solar panels via the mounting hooks and transfers it into the roof structure.

Thus, embodiments of the mounting system comprise at least four mounting hooks for mounting a sequence of at least two panels in a ridge-to-eaves direction, and comprise fixation means for connecting and fixing each pair of mounting hooks neighboring in the ridge-to-eaves direction.

Preferably, embodiments of the mounting system further comprise an eave-side end hook having the same width and thickness as the mounting hook, suitably configured for fixing underneath a roof tile and for forming an eave-side counterpart for fixing a fixation means such as threaded bolt or a clip to those mounting hooks in the ridge-to-eave sequence which are closest to the eave. In one embodiment, the eave-side end hook comprises the batten-hook portion identical to that of the mounting hook of the first aspect. In particular, it comprises a passing portion made of a flat profile, for passing, after installation on the tiled roof, through an overlap region between an eave-side roof tile and a ridge-side roof tile overlapping the eave-side roof tile in their shingled arrangement. It further comprises a hook portion in ridge-side continuation of the passing portion, the hook portion having a stepped shape for gripping around a ridge-side edge of the eave-side roof tile and for gripping around a ridge-side back edge of the roof batten used for mounting the eave-side roof tile. The batten-hook portion continues, in the ridge-to-eave direction, into an integrally formed ridge-side connection means, for fixing the mounting hook to a next neighboring mounting hook to be arranged in the ridge-side direction, and for fine tuning its positioning.

A third aspect of the present invention is formed by a roof arrangement, which comprises
- a pitched roof having roof tiles arranged in a shingled arrangement on a plurality of parallel, horizontal roof battens;
- at least one solar panel mounted on the roof by a mounting system according to the second aspect of the present invention or one of its embodiments.

In the roof arrangement, each panel is mounted using at least two of the mounting hooks. The batten-hook portion of each mounting hook passes with its passing portion through an overlap region between a respective eave-side roof tile and a respective ridge-side roof tile overlapping the eave-side roof tile in their shingled arrangement. The hook portion of each mounting hook, in continuation of the passing portion, grips around a ridge-side edge of the respective eave-side roof tile and around a ridge-side back edge of the respective roof batten used for mounting the eave-side roof tile.

The roof arrangement of the third aspect is a pitched tiled roof with an installed solar power station mounted using a mounting system according to the second aspect of the present invention. It therefore shares the advantages described in the contexts of the first and second aspects of the present invention.

The previously mentioned method of the second aspect of the invention for installing a mounting hook of the first aspect on a pitched roof having roof tiles on horizontal roof battens forms the basis for a fourth aspect of the invention, which is a method for installing a solar panel on a pitched roof having roof tiles on horizontal roof battens in a shingled arrangement. The method of the fourth aspect comprises installing, using the method of the second aspect, at least two mounting hooks of the first aspect to embrace the same roof batten in a mutual horizontal distance smaller than a lateral extension of the solar panel to be mounted, and mounting the solar panel in the panel-mounting portions of the two mounting hooks.

### BRIEF DESCRIPTION OF THE DRAWINGS

In the following, further embodiments of the different aspects of the invention will be described with reference to the enclosed drawings. In the drawings:
- Fig. 1: is a perspective view of a mounting hook of a first embodiment;
- Fig. 2: is a side view of a mounting hook of a second embodiment,
- Fig. 3: is a perspective view of a mounting hook of a third embodiment;
- Fig. 4: is a perspective view of a mounting hook of a fourth embodiment;
- Figs. 5-10: are illustrations of an embodiment of a roof arrangement during different stages of performing an embodiment of a method for installing a mounting hook and a solar panel on a pitched roof having roof tiles;
- Figs. 11-14: are different perspective views showing the installation and adaptation of a fixation means used to connect a pair of two mounting hooks neighboring in the eave-to-ridge direction;
- Figs. 15, 16: are side views of a pair of two mounting hooks neighboring in the eave-to-ridge direction in different constellations of the fixation means to adapt for two different lengths of roof tiles;
- Fig. 17: is a schematic side view of a roof arrangement comprising solar panels installed using a mounting system according to an embodiment;
- Fig. 18: is a perspective view of an eave-side end hook for use in the roof arrangement of Fig. 17;
- Fig. 19: is an illustration of an alternative embodiment of a fixation means used to connect a pair of two mounting hooks neighboring in the eave-to-ridge direction;
- Fig. 20: is an illustration of a further roof arrangement according to an embodiment of the invention;
- Fig. 21: is a perspective view of a variant of a fixation means;
- Fig. 22: is a perspective view of a latch for use with the fixation means of Fig. 21; and
- Fig. 23: is a view of a part of a pair of mounting hooks neighboring in the eave-to-ridge direction connected by the fixation means and latch of Figs. 21 and 22.

### DETAILED DESCRIPTION OF THE DRAWINGS

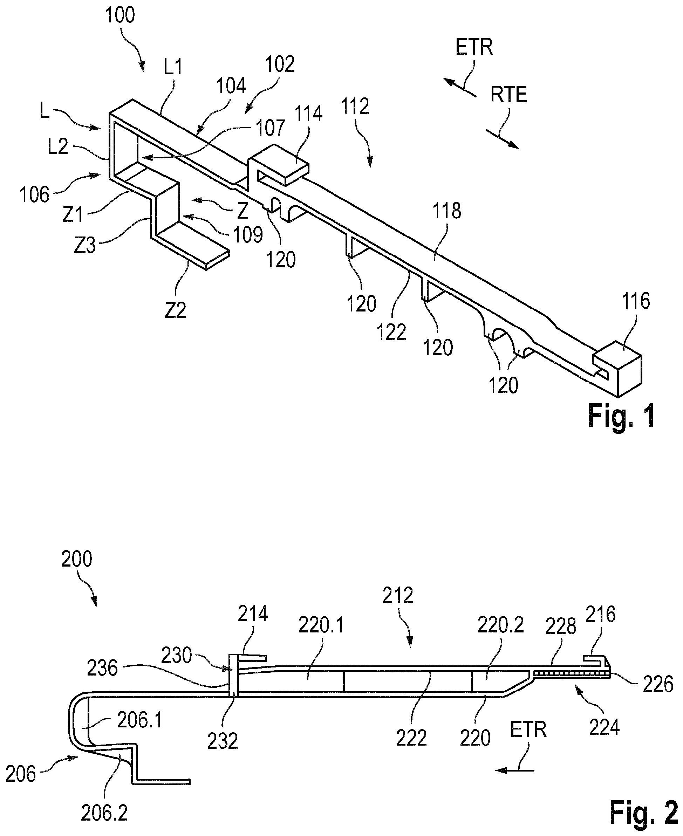

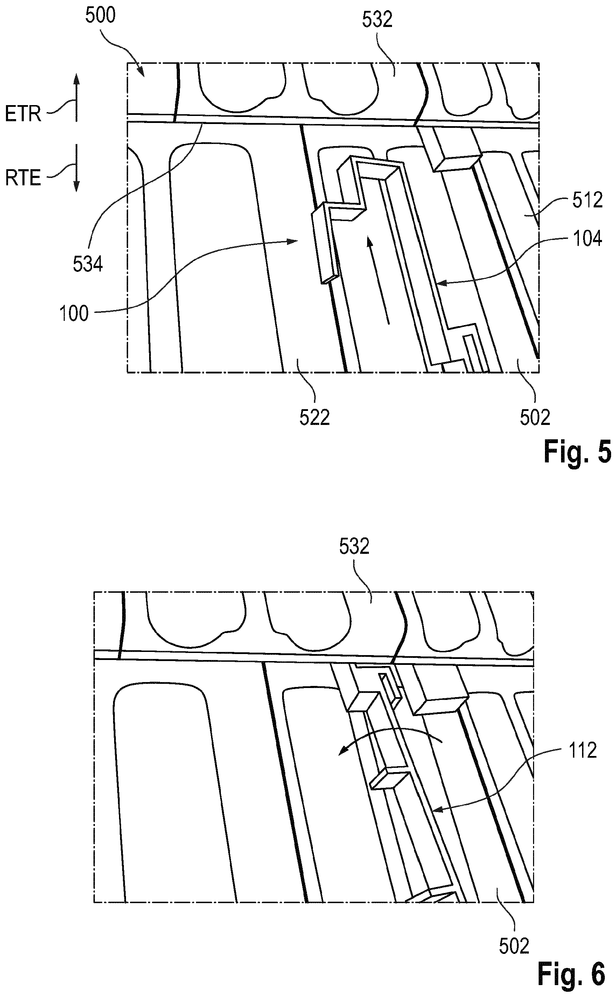

The following description refers to Figs. 1 and Figs. 5 to 8 in parallel. Fig. 1 is a perspective view of a mounting hook 100 of a first embodiment. Figs. 5 to 8 are illustrations of different stages of an embodiment of a method for in-stalling the mounting hook 100.

A tiled roof suitable for installation of the mounting hook 100 is shown in the illustrations of Figs. 5 to 8. In particular, the following concentrates on a pair of roof tiles formed by an eave-side roof tile 502 and a ridge-side roof tile 532 that overlaps the eave-side roof tile 502 in a shingled arrangement.

The mounting hook 100 comprises a ridge-side batten-hook portion 102 and an eave-side solar-panel mounting portion 112. The following description turns to the structure and function of the batten-hook portion 102 before turning to the solar-panel mounting portion 112.

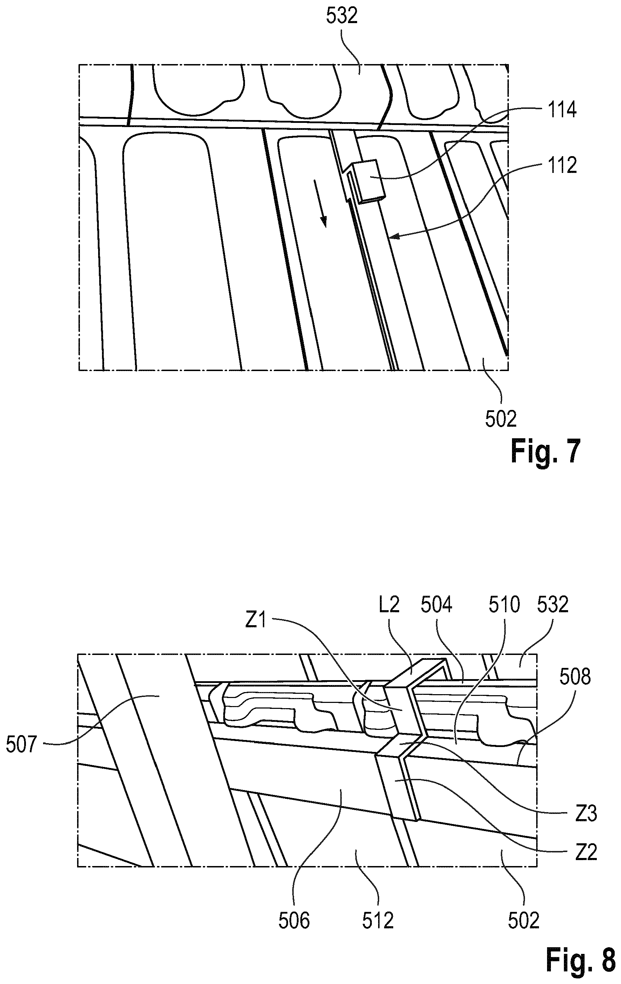

The batten-hook portion 102 comprises a passing portion 104 made of a flat profile. The passing portion is configured for passing, after installation on the tiled roof, through an overlap region between the eave-side roof tile 502 and the ridge-side roof tile 532. The batten-hook portion 104 further comprises a hook portion 106 in ridge-side continuation of the passing portion 104. The hook portion 106 has a stepped shape for gripping around a ridge-side edge 504 of an eave-side roof tile 502 (cf. Figs. 5 and 8) and for gripping around a ridge-side back edge 508 of a horizontal roof batten 506 (cf. Fig. 8) used for mounting the eave-side roof tile 502. In the roof construction shown in Figs. 5 to 8, roof tiles 502, 512, and 522 in a given horizontal row of roof tiles are hung onto the ridge-side front edge 501 of the roof batten 506.

The batten-hook portion 104 can be described as combination of an L-shaped portion labelled L in Fig. 1, and a Z-shaped portion labelled Z. The L-shaped portion comprises a long L-bar L1 and a short L-bar L2. A suitable an inner length, i.e., neglecting the thickness of adjacent perpendicular bars that add to the length, of the short L-bar to grip around the ridge-side edge of the eave-side tile is between 30 and 70 mm, preferably between 40 and 60 mm. In one embodiment, the length of the short L-bar to grip around the ridge-side edge of the eave-side tile is 50mm.

The short L-bar L2 is connected to a first Z-bar Z1 of the Z-shaped portion and extends perpendicularly to the short-L-bar L2, and substantially parallel and opposite to the long L-bar L1. In fact, a slight inclination smaller than 10 degrees between the first Z-bar Z1 and the long L-bar L1 may be present to improve a grip of the hook portion around an ridge-side edge of the eave-side tile. A suitable length of the first Z-bar Z1 to grip around the ridge-side edge of the eave-side tile 502 is equal or larger than the distance from the ridge-side edge of the roof 506 batten to the ridge-side edge of the eave-side roof tile 502. In some embodiments, the first Z-bar Z1 has a length between 35 and 50 mm. In one embodiment, the length of the first Z-bar Z1 is about 43 mm.

The Z-shaped portion Z further comprises a second Z-bar Z2, which is substantially parallel to the first Z-bar Z1 or is at the same inclination to it as the long L-bar L1. Moreover, a middle Z-bar Z3 connects the first and second Z-bars Z1 and Z2 with each other. This creates a stepped shape of the hook portion 106. The middle Z-bar Z3 and the second Z-bar Z2 serve to grip around the roof batten 506.

After installation, the passing portion 104 is to extend lengthwise substantially completely in the overlap region of the given pair of the ridge-side roof tile 532 and the eave-side roof tile 502. Therefore, the length of the passing portion spans at least the distance between the ridge-side edge 504 of the eave-side roof tile 502, which the hook portion 106 grips around after installation, and an eave-side edge 534 of the ridge-side roof tile 532, from which the mounting hook 100 visibly extends further downwards in the direction of the eave with its solar panel mounting portion 112. A suitable length of the passing portion is typically in the range between 120 and 200 mm, more preferably between 140 and 170 mm. In one embodiment it is 150 mm. The thickness of the passing portion should be as small as can be without risking mechanical stability issues, in order to influence the overlap of the tiles as little as possible. A suitable thickness of the passing portion is, e.g., 5 mm.

In the following, the solar-panel mounting portion 112 will be described in more detail. The solar-panel mounting portion 112 comprises a ridge-side clamp 114 for gripping around a ridge-side edge of the solar panel to be mounted (not shown), and an eave-side clamp 116 arranged at a distance from the ridge-side clamp in a ridge-to-eaves direction indicated by an arrow labelled RTE in Figs. 1 and 5, for gripping around and supporting an eave-side edge of the solar panel to be mounted. In the present example, the clamps 114 and 116 are C-shaped with openings facing each other. The opening has a width suitable to accommodate the thickness of a solar panel to be mounted. Other forms of clamps may be used. The C-shape, however, has the advantage of allowing the mounting of a solar panel without requiring the use of a tool, while providing a mounting strength that prevents unwanted motion of a mounted solar panel, for instance under windy weather conditions.

The solar panel-mounting portion 112 has a front support face 118 that faces the solar panel to be mounted and that is supported by a number spacers 120. The spacers 12 extend from a back side 122 of the panel-mounting portion 112 to establish an elevation of the solar panel to be mounted from a supporting roof tile. The length of the spacers is advantageously selected to allow placing electrical cables, connectors and other electrical parts in the space between the back side 122 and the roof tile.

A suitable length of the mounting hook to accommodate solar panels having a length in ridge-to-eave direction of about one roof tile length is in the range between 280 and 450mm. A suitable horizontal extension is between 20 and 30 mm. In one embodiment, the horizontal extension is 25 mm.

The mounting hook 100 is an integrally formed and strip-shaped piece. The mounting hook can thus be provided as one piece coming in different standard lengths to accommodate the mounting of solar panels with different heights. The mounting hook of this exemplary embodiment can be made of Polypropylene (PP) or Polyamide (PA), which achieves a particularly light but stable and long-lived structure. A glass filling may be used to increase stiffness and creep resistance. As mentioned, any suitable material can be used, for example a metal or a fibre-based carbon material.

From the foregoing description it becomes clear that the mounting hook 100 makes obsolete the use of screws or the like for fixation of a mounting hook on the rafters of the roof structure. Instead, the mounting hook 100 uses passing portion 104 and the step-shaped ridge-side batten-hook portion 106 for gripping around the eave-side roof tile 502 and for gripping around the roof batten 506 used for mounting the eave-side roof tile 502. This way, the mounting hook 100 is hooked up to this roof batten after installation, and the roof batten 506 is used to transfer the load of solar panels to be mounted. The load of the solar-panels in a mounted state is thus partially transferred to the roof battens, and to some extent to the roof tiles. The mounting hook is thus particularly shaped in order to establish a partial load transfer for the weight of the solar panels to the roof batten. Since the roof battens in all the different roof constructions hardly differ in shape and cross-sectional dimensions, in particular with regard to their cross-sectional profile, by using the horizontal roof battens for mounting the mounting hook to the roof structure the mounting hook 100 achieves the further advantage that it is universally suited for use many different types of pitched roofs.

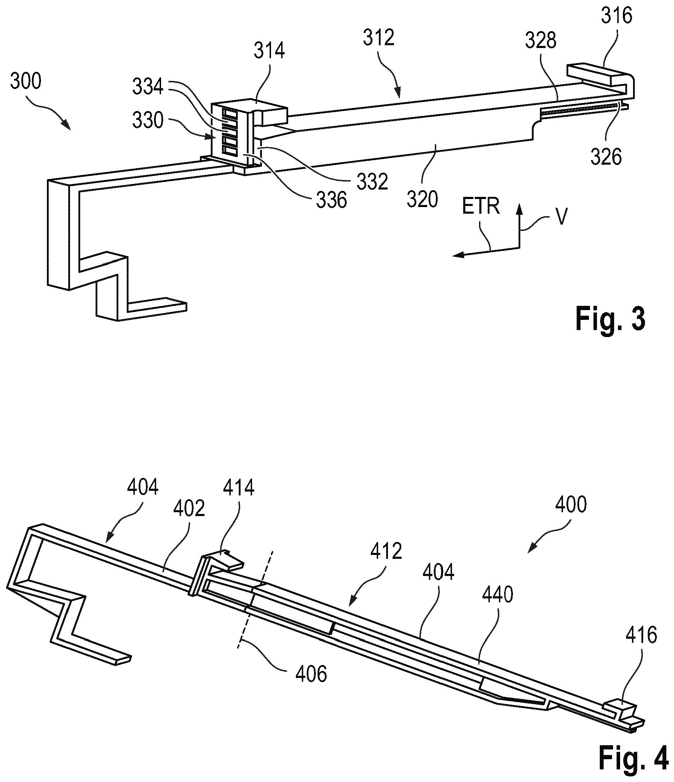

In the following, further embodiments of the mounting hook of the invention will be described with reference to Figs. 2, 3 and 4. To avoid repetitions, the description will focus on structural differences of these embodiments from the mounting hook 100 of Fig. 1. Fig. 2 is a side view of a mounting hook 200 of a second embodiment. Fig. 3 is a perspective view of a mounting hook 300 of a third embodiment. Fig. 4 is a perspective view of a mounting hook 400 of a fourth embodiment. Reference labels used in Figs. 2 to 4 for structural elements corresponding to those of the mounting hook of Fig. 1 resemble the reference labels used in Fig. 1 in that the last two digits are identical.

The mounting hook 200 of Fig. 2 differs from that of Fig. 1 in that it has a continuous spacer structure 220 extending from the ridge side clamp 214 towards the eave-side clamp 216. The spacer structure 220 has a single opening 222 of a suitable width and height to allow the arrangement of cables etc., as mentioned above. Furthermore, the mounting hook 200 has an integrally formed eave-side connection means 224 for connecting the eave-side end to a next-neighboring mounting hook. In the present embodiment, the connection means comprises rails 226 formed into side faces 228 of the solar-panel mounting portion 112 near the eave-side edge. The rails are dented in the present embodiment in order to provide a stepwise adaptability of the mutual positioning of the neighboring mounting hooks in the eave-to-ridge direction ETR. However, the use of dented rails is not a requirement. In other embodiments, no dents are used, and a continuous adaptability of the mutual positioning is realized.

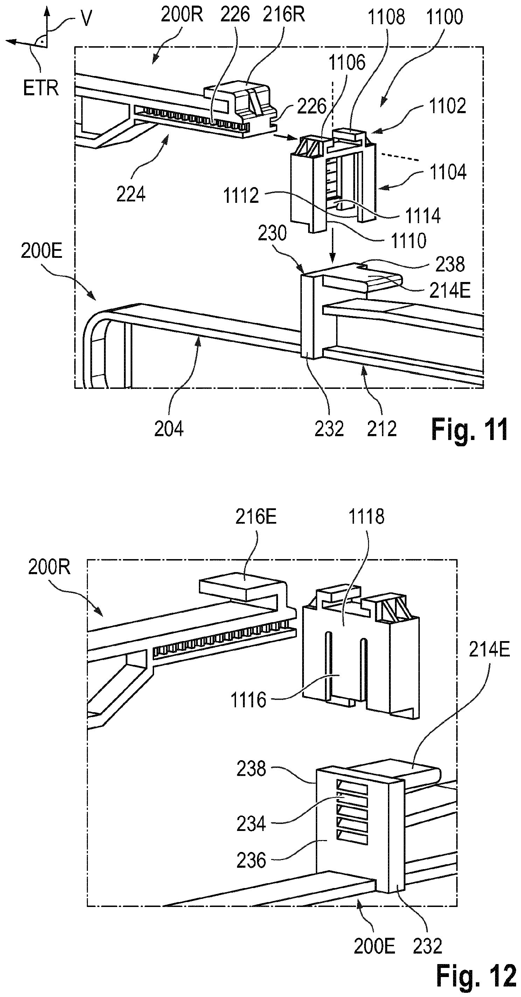

The mounting hook 200 further has a ridge-side connection means 230 near the ridge-side clamp 214. It serves for fixing the mounting hook 200 to a next neighboring mounting hook to be arranged in the eave-to-ridge direction. It further serves for fine-tuning the position of these mounting hooks relative to each other. The ridge-side connection means 230 is formed by a back wall 236 adjacent to the ridge-side clamp 214 and its laterally protruding side edges, one of which is visible and marked with the reference label 232. The structure as will become clearer from additionally considering Fig. 11, which shows a mounting hook 200E of the type of mounting hook 200 from a different perspective. The connection means 230 will therefore be explained in more detail the context of the description of Fig. 11.

Furthermore, the mounting hook 200 is improved in terms of mechanical stability by stabilizers 206.1, 206.2, 220.1 and 220.2 in edge zones of the hook portion 206 and in the spacer structure 220.

The mounting hook 300 of Fig. 3 differs from the mounting hook 100 of Fig. 1 in that it has a continuous, massive spacer structure 320 extending from the ridge side clamp 314 towards the eave-side clamp 316. As in the mounting hook 200, rails 326 are formed into side faces 328 of the solar-panel mounting portion 312 near the eave-side edge. Furthermore, a ridge-side connection means 330 at the ridge-side clamp 314 is provided, for fixing the mounting hook 300 to a next neighboring mounting hook in the eave-to-ridge direction ETR. The ridge-side connection means 330 comprises integrally formed rails 332 extending in a vertical direction V pointing from a supporting roof tile towards the panel to be mounted. The rails are shaped to engage with a slider of a mounting clip, which will be presented with reference to Figs. 11 to 14. Furthermore, the ridge-side connection means 330 has a sequence of edges, steps or, in the present case, indentations 334 in a ridge-side face 336 of the clamp 314, at the same time forming a ridge-side face of the panel mounting portion 312. The indentations 334 provide edges in parallel to the panel to be mounted at different vertical distances from it, for engaging with a mounting clip (see Figs. 11 to 14) at an adaptable distance from the panel in the vertical direction V. This way, an adaptability in the mutual positioning of neighboring mounting hooks is achieved in both directions, eave-to-ridge ETR and vertical V.

The mounting hook 400 of Fig. 4 largely corresponds to the mounting hook 200 of Fig. 2. However, while the mounting hooks 100 to 300 are integrally formed single piece, the mounting hook 400 is composed of in two separate pieces 440 and 442, which are drawn in different grey tones. The position of a connection interface between the two pieces 440 and 442 is indicated by a dashed line 406. Mutually engaging coupling elements, e.g., a thread-and-bolt connection (not shown), for fixing the two pieces to each other allow a releasable coupling. The first piece 440 of the mounting hook 400 is formed by a ridge side part of the solar-panel mounting portion 412 including the ridge side clamp 414 and by the passing portion 404. An eave-side part of the solar-panel mounting portion 412 including the eave-side clamp 416 and a beam 440 of suitable length that is shorter or longer in different versions form the second piece 412.

The following description returns to Figs. 5 to 10 to illustrate an embodiment of a roof arrangement 500 during different stages of performing an embodiment of a method for installing a mounting hook and a solar panel on a pitched roof having roof tiles. The roof arrangement 500 comprises a pitched roof with roof tiles such as the roof tiles 502 and 532 arranged in a shingled arrangement. The roof tiles 502 and 532 are each arranged in a horizontal row of roof tiles. Each row of roof tiles is hung onto a respective one of a plurality of parallel, horizontal roof battens such as roof batten 506, which is fixed to rafters, one of which is visible in Fig. 8 and carries the reference label 507.

The installation of the mounting hook 100 is illustrated in the sequence of Figs. 5 to 8. While Figs. 5 to 7 show a front side view of the roof arrangement, Fig. 8 is a view from the back side.

The mounting hook 100 is to be mounted between the pair of overlapping roof tiles 502 and 532, the eave-side roof tile 502 and the ridge-side roof tile 532. With reference to Figs. 5 and 6, an eave-side edge 534 of the ridge-side roof tile 532 is lifted up from the eave-side roof tile 532. This can typically be done by hand without use of any tools. As visible in Figs. 5 and 6, for the purpose of clearly illustrating the ridge-side roof tile 532 in the lifted state while taking a photo of the arrangement, a piece of wood was inserted between the eave-side and ridge-side tiles 502 and 532. However, during an actual installation process, no tool whatsoever is not required. The installer can use one hand to lift the ridge-side tile 532, and use the other hand to hold and turn the mounting hook 100 sideways, as illustrated in Fig.5, and to pass the batten-hook portion 102 of the mounting hook turned sideways through the space created underneath the lifted ridge-side roof tile 532 and over the eave-side roof tile 502. As can best be judged from the backside view shown in Fig. 8, the mounting hook 100 is suitably pushed upwards to a position that places the hook portion 106 beyond the ridge-side edge 504 of the eave-side tile 502. Once this position has been reached, the mounting hook 100 can subsequently be turned back sideways, cf. Fig. 6, and pulled downwards towards the eave, cf. Fig. 7, thereby engaging the mounting hook 100 by gripping around the ridge-side edge 504 of the eave-side roof tile 502 and by gripping around a ridge-side back edge 508 of the roof batten 506 that is used for mounting the eave-side roof tile 502. The hook portion 106 of the mounting hook 100 is shown in its engaged position in the backside view of Fig. 8.

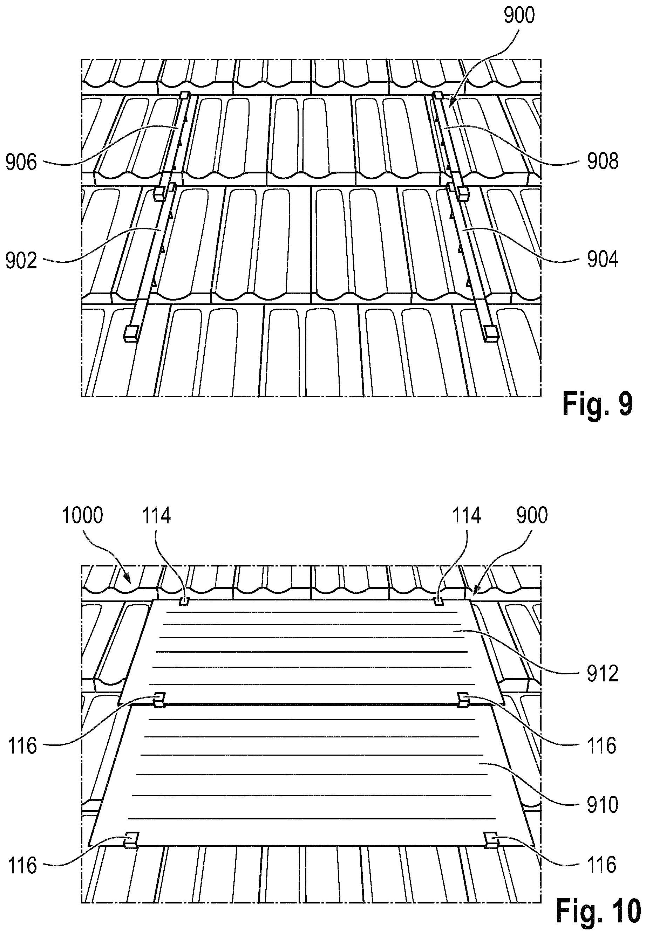

Fig. 9 shows an exemplary mounting system 900 of four mounting hooks 902, 904, 906, 908 installed on two neighboring rows of roof tiles. The mounting hooks are supported by two neighboring roof battens, which are not visible in the front view of Fig. 9. The installation process for a complete mounting system repeats the process described with reference to Figs. 5 to 8 for each of the mounting hooks 902 to 908. Mounting hooks are suitably installed in the same horizontal positions of the individual roof tiles. This creates uniform and parallel mounting planes for mounting the solar panels, which are parallel to those planes which are defined by the surfaces of the roof tiles in their different rows. The installation process suitably moves either upward or downward row by row of the planned installation, i.e., from the row of tiles closest to the eave to the row closest to the ridge or vice versa. A horizontal distance between pairs of neighboring mounting hooks 902, 904 and 906, 908 is selected, in units of roof tiles, with a view to the horizontal extension of the solar panel to be installed. In case of a particularly large horizontal extension of the solar panel or a particularly large weight of the solar panel, more than two mounting hooks can be used to mount it. An fine tuning or, in other words adaptation of the mutual position in the eave-to-ridge direction and in the vertical direction, and a mutual fixation of mounting hooks neighboring to each other is also performed and will be described with reference to Figs. 11 to 14 below. Furthermore, the exemplary illustration of Figs. 5 to 10 does not show the use of an end mounting hook for fixing the mounting system at the eave-side end of the installation.

A finished roof arrangement 1000 is shown in Fig. 10. After the installation, positional fine tuning and mutual fixation of the mounting hooks 902 to 908 of the mounting system 900, solar panels 910 and 912 are installed by engaging them with the ridge-side clamps and the eave-side clamps of the solar-panel mounting portion of the respective mounting hooks 902 to 908.

The following description turns to Figs. 11 to 14 in parallel. Figs. 11 to 14 are different perspective views showing an installation and positional fine tuning process of a fixation means used to connect a pair of two mounting hooks neighboring in the eave-to-ridge direction with a desired mutual positioning.

Figs. 11 and 12 show sections of two mounting hooks 200R and 200E of the type of mounting hook 200 of Fig. 2, namely, a ridge-side mounting hook 200R and an eave-side mounting hook 200E. Furthermore, a fixation means in the form of a connector clip 1100 is shown. The connector clip 1100 has a head section 1102 and a body section 1104. The head section 1102 has two head rails 1106 and 1108. The head-rails 1106 and 1108 have the shape of an inverted L, the short L-bars facing each other for engaging with side rails 226 or the eave-side connection means 224 on the ridge-side mounting hook 200R. The body section 1104 of the connector clip 1100 has two C-shaped inside clamps 1110 and 1112. They are designed to engage with the side edges 232 and 238 of the ridge-side connection means 230, which protrude laterally from the flat profile of the passing portion 204 and from a flat bottom profile of the backside of the solar-panel-mounting portion 212. Furthermore, the connector clip 1100 has a snap-in tooth 1114 arranged on a resiliently movable tongue section 1116 of a ridge-side back wall 1118. The snap-in tooth 1114 faces an inside volume of the connector clamp 1100 between the C-shaped inside clamps 1110 and 1112 to engage with one of the indentations 234 provided in the ridge-side face 236 of the ridge-side clamp 214E.

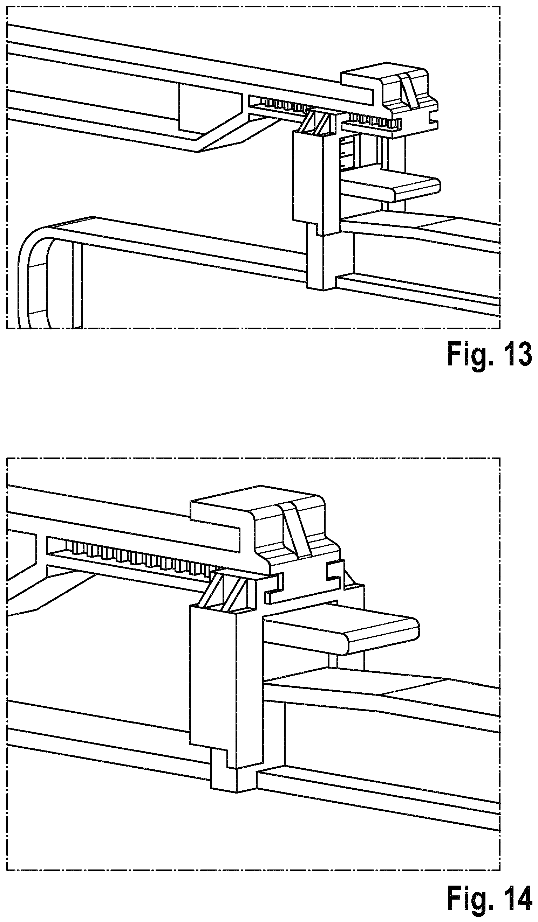

Thus, by engagement of the head rails 1106 and 1108 of the connector clip 1100 with the side rails 226 of the ridge-side mounting hook 200R a motion of the mounting hook 200R relative to the mounting 200E in the vertical direction V is blocked. Furthermore, by sliding the connector clip 1100 along rails 226 of the eave-side connection means 224 of the ridge-side mounting hook 200R in the eave-to-ridge direction ETR, a fine tuning of the positioning of the ridge side mounting hook 200R relative to the eave-side mounting hook 200E in the eave-to-ridge direction ETR is enabled. This feature can be used to adapt the mounting system to a given extension of the roof tiles of a given roof, and therefore ensures the usability of this mounting system for a wider range of tile extensions. Exemplary relative positioning settings of the are mounting hooks 200E and 200R with the aid of the connector clip 1100 are shown in Figs. 13 and 14.

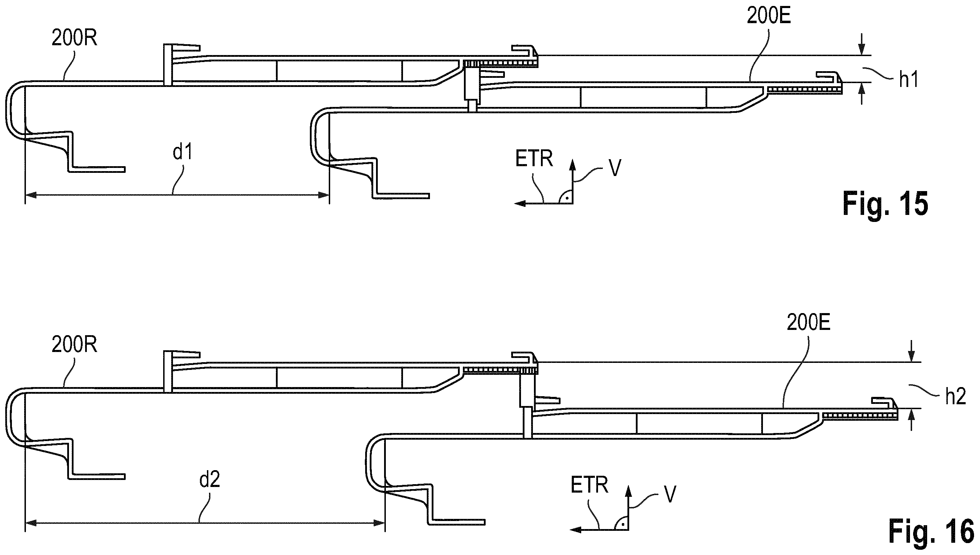

To further illustrate this feature, Figs. 15 and 16 are side views of the two mounting hooks 200R and 200E of Figs. 11 to 14 in different constellations of the connector, to adapt for two different lengths of roof tiles. As can be seen by a comparison of Figs. 15 and 16, different relative position settings in the eave-to ridge direction ETR result in different distances d1 and d2 between the ridge-side ends of the mounting hooks 200R and 200E. Also, different relative position settings in the vertical direction V result in different vertical distances h1 and h2 between the mounting hooks 200R and 200E.

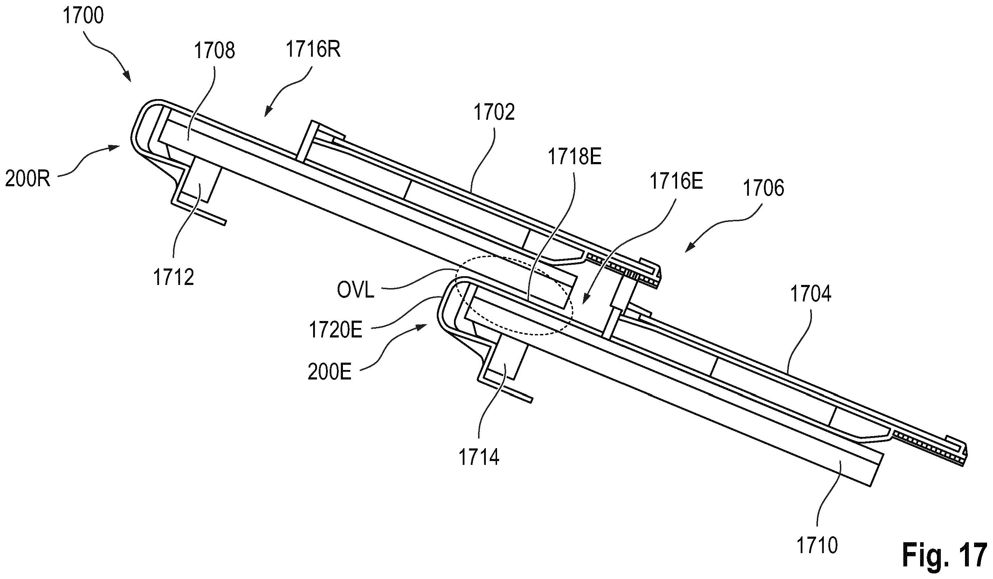

Fig. 17 is a schematic sectional side view of a roof arrangement 1700 comprising solar panels 1702 and 1704 installed using a mounting system 1706 according to an embodiment of the invention. A pitched roof has roof tiles 1708 and 1710 arranged in a shingled arrangement on parallel, horizontal roof battens 1712 and 1714. The solar panels 1702 and 1704 are mounted using at least two of the mounting hooks of the type shown in Figs. 2 and 11 to 16, wherein only one mounting ridge-side hook 200R and 200E per solar panel is visible in the side view of Fig. 17. The batten-hook portion 1716E of the eave-side mounting hook 200E passes with its passing portion 1718E through an overlap region OVL between the eave-side roof tile 1710 and the ridge-side roof tile 1708. The hook portion 1720E in continuation of the passing portion 1718E the mounting hook 200E grips around a ridge-side edge of the eave-side roof tile 1710 and around a ridge-side back edge of the roof batten 1714 used for mounting the eave-side roof tile.

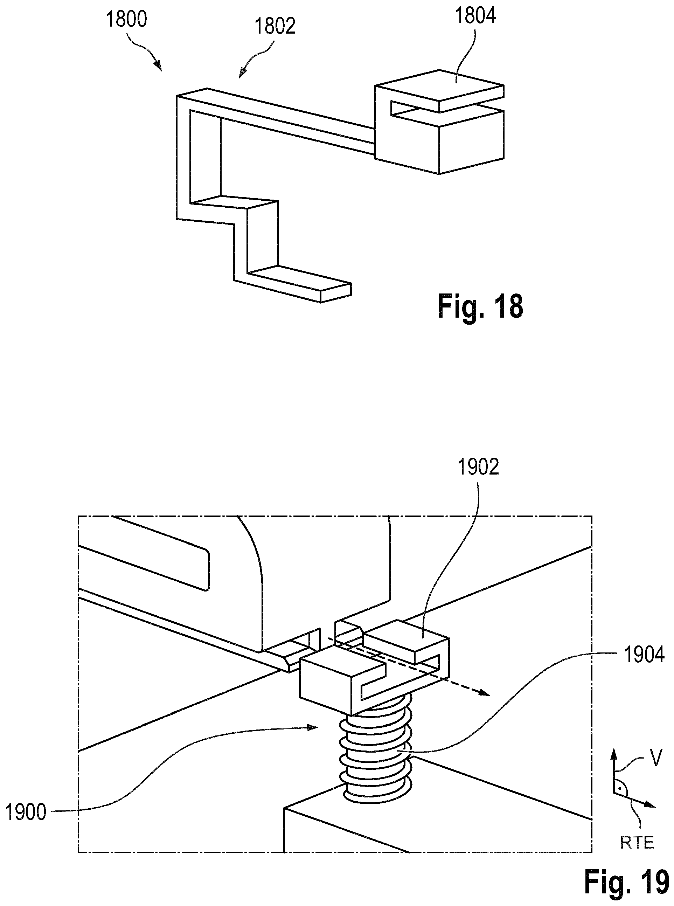

Fig. 18 is a perspective view of an eave-side end hook for use in the roof arrangement of Fig. 17. The eave-side end hook is based on the design of the mounting hook of Fig. 3. For brevity, the details of the batten-hook portion 1802 of the end hook 1800 will not be described again. Reference is made to the description of Figs. 1 and 3 for details. Furthermore, the end hook 1800 comprises a ridge-side connection means 1804 to provide a counterpart for a connector clip of the type shown in Figs. 11 to 16, to connect to that mounting hook in the ridge-to-eave sequence which is closest to and1100 the eave. As described in the context of Fig. 3, the ridge-side connection means 1804 is integrally formed into the backside of a clamp section which is not used. Alternative designs of the end hook do not have such a clamp section.

Fig. 19 is an illustration of an alternative embodiment of a fixation means used to connect a pair of two mounting hooks neighboring in the eave-to-ridge direction. The fixation means forms an alternative to the connector clip 1110 and takes the form of a connector screw 1900 with a slider-shaped head section 1902 and a threaded bolt 1904. To fix the connector screw to an eave-side mounting hook near its ridge-side clamp, a threaded hole is provided in the eave-side mounting hook a position near its ridge-side clamp. This provides an alternative way of connection, and of fine tuning the positioning of the ridge-side mounting hook in the vertical direction V. The sliding connection and fine tuning capability of the slider-shaped head section 1902 corresponds to that of the connector clip 1100 shown in Figs. 11 to 16. The slider-shaped head section 1902 may be rotatably mounted on the bolt section 1904 in order to allow a particularly fine adaptation in the vertical direction using arbitrary amounts of rotation. However, a correspondingly fine thread pitch can be used in the alternative, making use only of two rotational positions, in which the slider is aligned with the rails of the neighboring ridge-side mounting hook.

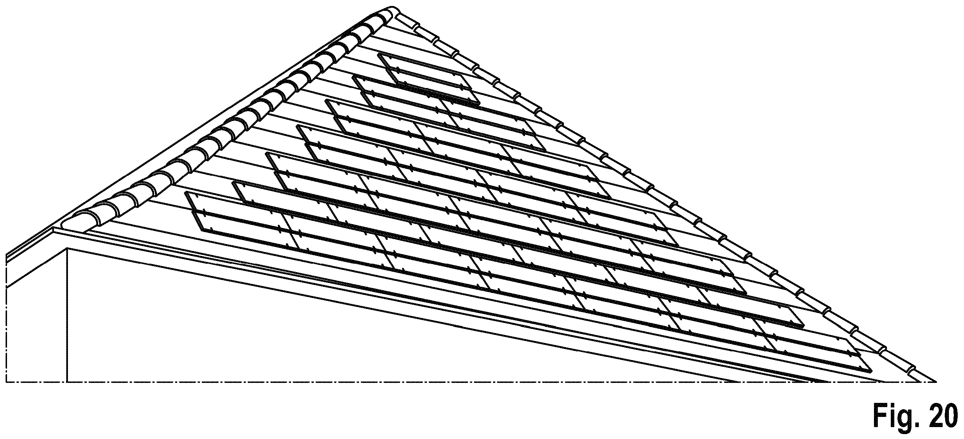

Fig. 20 illustrates a further roof arrangement according to an embodiment of the invention on a roof with a different type of roof tiles closer to a shingle shape. As mentioned roof tiles come in different shapes and materials and as such also include shingles or shakes.

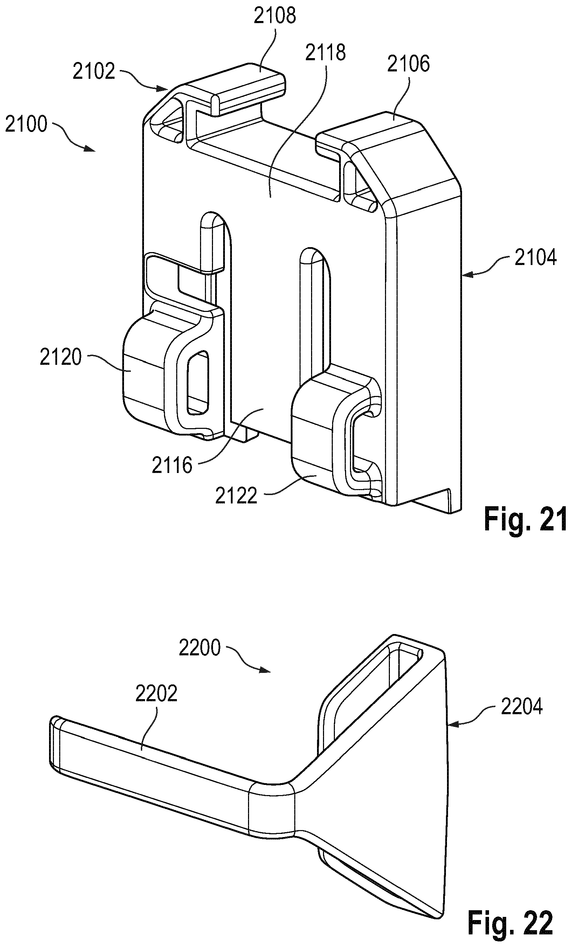

Fig. 21 is a perspective view of a variant of a fixation means in the form of a connection clip 2100 with keepers for allowing engagement of a latch. Fig. 22 is a perspective view of a latch for use with the fixation means of Fig. 21; and

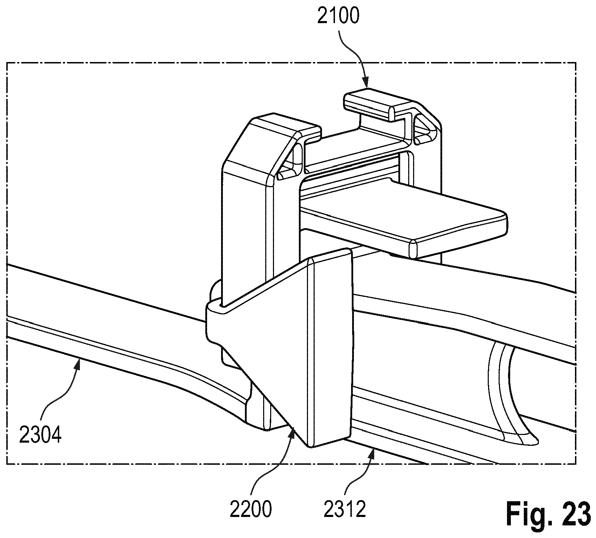

Fig. 23 is a view of a part of mounting hook with the fixation means and latch of Figs. 21 and 22 in a mutually engaged situation.

The connector clip 2100 generally resembles the connector clip 1100 shown in Figs. 11 to 14, with some minor differences in the design, for example in the design of edges for improved mechanical stability and durability. In particular, the two head rails 2106 and 2108 are additionally supported in their transition to the body section 2104. Furthermore, the body section 2104 of the connector clip 2100 has two C-shaped keepers 2120 and 2122, one on each side of the resiliently movable tongue section 2116 of the ridge-side back wall 2118. The keepers act as counterpieces for engagement of a latch during installation. An example of a suitable latch is the latch 2200 shown in Fig. 22, and a view of the latch 2200 in an engaged position is shown in Fig. 23. The addition of the latch mechanism provides additional safety in avoiding that the vertical tooth structure of the connection clip 2100 (not visible in Fig. 21 to 23) can be levered up under strong forces. In addition, the latch 2200 has an L-shape with long L-bar to engage with the keepers 2120 and 2122, and a short L-bar 2204 that is wide enough to the front so that it adds to preventing a mounted solar panel (not shown in Fig. 23) from slipping out of its mounted position.

## Claims

1. A mounting hook (100) for use in mounting a solar panel on a pitched roof having roof tiles (502, 532) on horizontal roof battens (502) in a shingled arrangement, the mounting hook comprising
- a ridge-side batten-hook portion (102) and an eave-side solar panel mounting portion (112); wherein
- the batten-hook portion (102) comprises
a passing portion (104) made of a flat profile (L1), for passing, after installation on the tiled roof, through an overlap region between an eave-side roof tile (502) and a ridge-side roof tile (532) overlapping the eave-side roof tile (502) in their shingled arrangement; and
a hook portion (106) in ridge-side continuation of the passing portion (104), the hook portion having a stepped shape for gripping around a ridge-side edge (504) of the eave-side roof tile (502) and for gripping around a ridge-side back edge (508) of the roof batten (502) used for mounting the eave-side roof tile (502), wherein
the solar panel-mounting portion (112) comprises a ridge-side clamp (114) for gripping around a ridge-side edge of the solar panel (912) to be mounted, and an eave-side clamp (116) arranged at a distance from the ridge-side clamp in a ridge-to-eaves direction, for gripping around and supporting an eave-side edge of the solar panel (912) to be mounted, and wherein
at least a ridge side part of the solar-panel mounting portion (112) including the ridge side clamp and the batten-hook portion (102) are integrally formed as a first integrated piece, and an eave-side part of the solar-panel mounting portion including the eave-side clamp and a beam are formed as a second integrated piece, or
the mounting hook is formed as an integrally formed, strip-shaped piece.

2. The mounting hook of claim 1, wherein
- the batten-hook portion (102) comprises an L-shaped portion (L) comprising a long L-bar (L1) and a short L-Bar (L2), the latter being connected to a first Z-bar (Z1) of a Z-shaped portion (Z) which further comprises a second Z-bar (Z2) and a middle Z-bar (Z3) connecting the first and second Z-bars, and wherein
- the passing portion includes (104) the long L-bar (L1),
- a tile-gripping portion (107) of the hook portion (106) is formed by the short L-bar (L2) and the first Z-bar (Z1) that extends opposite the passing portion (104) from an end of the short L-bar (L2), and wherein
- a batten-gripping portion (109) is formed by the middle Z-bar (Z3) and the second horizontal Z-bar (Z2) that extends opposite the passing portion (104) from an end of the middle Z-bar (Z3).

3. The mounting hook (100) of any of the preceding claims, wherein the solar panel-mounting portion comprises a front support face (118) that faces the solar panel to be mounted and that is supported by least one spacer (120), which extends on a back side (122) of the solar-panel mounting portion (112) to establish an elevation of the solar panel (912) to be mounted from a supporting roof tile.

4. The mounting hook (300) of any of the preceding claims, wherein the solar panel-mounting portion (312) comprises an integrally formed eave-side connection means (326) that is arranged near the eave-side clamp (316), for fixing the mounting hook (300) at an adaptable position in eave-to-ridge direction (ETR) to a next neighboring mounting hook to be arranged in the ridge-to-eave direction (RTE).

5. The mounting hook (300) of claim 4, wherein the solar-panel mounting portion further comprises an integrally formed ridge-side connection means (330) near the ridge-side clamp (314), for fixing the mounting hook (300) to a next neighboring mounting hook to be arranged in the eave-to-ridge direction (ETR).

6. The mounting hook of claim 5, wherein the ridge-side connection means (330) comprises integrally formed rails (332) extending in a vertical direction (V) pointing from a roof tile to support towards the panel to be mounted, and shaped to engage with a slider of a mounting clip, and a sequence of edges extending in parallel to the panel to be mounted at different vertical distances from it, on or in a ridge-side face of the panel mounting portion, for engaging with a mounting clip at an adaptable distance from the panel.

7. The mounting hook of any of the preceding claims, wherein the panel-mounting portion comprises a bore extending, near the eave-side clamp, from its front support face through its back side, for accommodating a fixation means that reaches through the bore and into to a next neighboring mounting hook to be arranged in the eave-side direction.

8. A mounting system for mounting a solar panel on a pitched roof having roof tiles on horizontal roof battens in a shingled arrangement, the mounting system comprising two or more mounting hooks according to any of the preceding claims.

9. The mounting system of claim 8, comprising at least four mounting hooks according to one of the claims 5 to 7 for mounting a sequence of at least two panels in a ridge-to-eaves direction, the at least four mounting hooks comprising respective connecting means for connecting each pair of mounting hooks neighboring in the ridge-to-eaves direction.

10. The mounting system of claim 8 or 9, further comprising an eave-side end hook (1800) having the same width and thickness as the mounting hook and comprising a batten-hook portion (1802) that is configured the same way as the batten-hook portion (102) of the mounting hook (100) of claim 1 and that continues into an integrally formed ridge-side connection means (1804), for fixing the end hook (1800) to a next neighboring mounting hook (100) to be arranged in the ridge-side direction.

11. A roof arrangement (1000), comprising
- a pitched roof having roof tiles (502, 532) arranged in a shingled arrangement on a plurality of parallel, horizontal roof battens (506);
- at least one solar panel (910, 912) mounted on the roof by a mounting system according to one of the claims 8 to 10, wherein each panel is mounted using at least two of the mounting hooks, wherein
the batten-hook portion of each mounting hook passes with its passing portion through an overlap region between a respective eave-side roof tile and a respective ridge-side roof tile overlapping the eave-side roof tile in their shingled arrangement; and wherein
the hook portion in continuation of the passing portion of each mounting hook grips around a ridge-side edge of the respective eave-side roof tile and around a ridge-side back edge of the respective roof batten used for mounting the eave-side roof tile.

12. A method for installing a mounting hook (100) according to any of the claims 1 to 7 on a pitched roof having roof tiles on horizontal roof battens (536) in a shingled arrangement, the method comprising
- selecting a pair of overlapping roof tiles formed by an eave-side roof tile (502) and by a ridge-side roof tile (532) for installation of the mounting hook;
- lifting an eave-side edge (534) of the ridge-side roof tile (532) up from the eave-side roof tile (502);
- turning the mounting hook (100) sideways and passing the batten-hook portion (102) of the mounting hook underneath the lifted ridge-side roof tile (532) and over the eave-side roof tile (502);
- subsequently turning the mounting hook (100) back sideways and pulling it towards the eave, thereby engaging the mounting hook by gripping around a ridge-side edge of the eave-side roof tile and gripping around a ridge-side back edge of that roof batten used for mounting the eave-side roof tile.

13. A method for installing a solar panel on a pitched roof having roof tiles on horizontal roof battens in a shingled arrangement, the method comprising
- installing, using the method of claim 12, at least two mounting hooks to embrace the same roof batten in a mutual horizontal distance smaller than a lateral extension of the solar panel to be mounted,
- mounting the solar panel in the panel-mounting portions of the two mounting hooks.

## Patentansprüche

1. Montagehaken (100) zur Verwendung bei einer Montage eines Solarpaneels auf einem Schrägdach mit Dachziegeln (502, 532) auf horizontalen Dachlatten (502) in einer Schindelanordnung, wobei der Montagehaken Folgendes umfasst
- einen firstseitigen Lattenhakenabschnitt (102) und einen traufseitigen Solarpaneel-Montageabschnitt (112); wobei
- der Lattenhakenabschnitt (102) umfasst
einen aus einem Flachprofil (L1) gebildeten Durchgangsabschnitt (104), der nach einer Installation auf dem Ziegeldach durch einen Überlappungsbereich zwischen einem traufseitigen Dachziegel (502) und einem den traufseitigen Dachziegel (502) in ihrer geschindelten Anordnung überlappenden firstseitigen Dachziegel (532) hindurchgeht; und
einen Hakenabschnitt (106) in der firstseitigen Fortsetzung des Durchgangsabschnitts (104), wobei der Hakenabschnitt eine abgestufte Form zum Greifen um eine firstseitige Kante (504) des traufseitigen Dachziegels (502) und zum Greifen um eine firstseitige Hinterkante (508) der Dachlatte (502) aufweist, die zur Montage des traufseitigen Dachziegels (502) verwendet wird, wobei
der Solarpaneel-Montageabschnitt (112) eine firstseitige Klammer (114) zum Greifen um eine firstseitige Kante des zu montierenden Solarpaneels (912) und eine traufseitige Klammer (116) umfasst, die in einem Abstand von der firstseitigen Klammer in einer Firstzu-Traufe-Richtung angeordnet ist, um eine traufseitige Kante des zu montierenden Solarpaneels (912) zu greifen und zu halten, und wobei
mindestens ein firstseitiger Teil des Solarpaneel-Montageabschnitts (112) einschließlich der firstseitigen Klammer und der Lattenhakenabschnitt (102) einstückig als ein erstes integriertes Stück ausgebildet sind, und ein traufseitiger Teil des Solarpaneel-Montageabschnitts einschließlich der traufseitigen Klammer und ein Träger als ein zweites integriertes Stück ausgebildet sind, oder
der Montagehaken als einstückig geformtes, streifenförmiges Stück ausgebildet ist.

2. Montagehaken nach Anspruch 1, wobei
- der Lattenhakenabschnitt (102) einen L-förmigen Abschnitt (L) umfasst, der einen langen L-Stab (L1) und einen kurzen L-Stab (L2) umfasst, wobei letzterer mit einem ersten Z-Stab (Z1) eines Z-förmigen Abschnitts (Z) verbunden ist, der ferner einen zweiten Z-Stab (Z2) und einen mittleren Z-Stab (Z3) umfasst, der den ersten und den zweiten Z-Stab verbindet, und wobei
- der Durchgangsabschnitt (104) den langen L-Stab (L1) enthält,
- ein ziegelgreifender Abschnitt (107) des Hakenabschnitts (106) von dem kurzen L-Stab (L2) und dem ersten Z-Stab (Z1), der sich gegenüberliegend zu dem Durchgangsabschnitt (104) von einem Ende des kurzen L-Stabs (L2) erstreckt, gebildet wird und wobei
- ein lattengreifender Abschnitt (109) von dem mittleren Z-Stab (Z3) und dem zweiten horizontalen Z-Stab (Z2), der sich gegenüberliegend zu dem Durchgangsabschnitt (104) von einem Ende des mittleren Z-Stabs (Z3) erstreckt, gebildet wird.

3. Montagehaken (100) nach einem der vorhergehenden Ansprüche, wobei der Solarpaneel-Montageabschnitt eine vordere Stützfläche (118) aufweist, die dem zu montierenden Solarpaneel zugewandt ist und die von mindestens einem Abstandshalter (120) getragen wird, der sich auf einer Rückseite (122) des Solarpaneel-Montageabschnitts (112) erstreckt, um eine Höhe des zu montierenden Solarpaneels (912) von einem tragenden Dachziegel aus festzulegen.

4. Montagehaken (300) nach einem der vorhergehenden Ansprüche, wobei der Solarpaneel-Montageabschnitt (312) ein einstückig ausgebildetes traufseitiges Verbindungsmittel (326) umfasst, das in der Nähe der traufseitigen Klammer (316) angeordnet ist, um den Montagehaken (300) in einer anpassbaren Position in Trauf-zum-First-Richtung (ETR) an einem nächst benachbarten Montagehaken zu befestigen, der in First-zur-Traufe-Richtung (RTE) anzuordnen ist.

5. Montagehaken (300) nach Anspruch 4, wobei der Solarpaneel-Montageabschnitt ferner ein einstückig ausgebildetes firstseitiges Verbindungsmittel (330) in der Nähe der firstseitigen Klammer (314) umfasst, um den Montagehaken (300) an einem nächst benachbarten Montagehaken zu befestigen, der in der Traufe-zum-First-Richtung (ETR) anzuordnen ist.

6. Montagehaken nach Anspruch 5, wobei das firstseitige Verbindungsmittel (330) einstückig ausgebildete Schienen (332) umfasst, die sich in einer vertikalen Richtung (V), die von einem zu stützenden Dachziegel zu der zu montierenden Platte zeigt, erstrecken und so geformt sind, dass sie mit einem Schieber eines Montageclips in Eingriff sind, und eine Folge von Kanten, die sich parallel zu dem zu montierenden Paneel in unterschiedlichen vertikalen Abständen von ihm auf oder in einer firstseitigen Fläche des Paneel-Montageabschnitts erstrecken, um mit einem Montageclip in einem anpassbaren Abstand von dem Paneel in Eingriff zu sein.

7. Montagehaken nach einem der vorhergehenden Ansprüche, **dadurch gekennzeichnet, dass** der Paneel-Montageabschnitt eine Bohrung aufweist, die sich in der Nähe der traufseitigen Klammer von seiner vorderen Stützfläche durch seine Rückseite erstreckt, um ein Befestigungsmittel aufzunehmen, das durch die Bohrung bis zu einem in traufseitiger Richtung anzuordnenden nächst benachbarten Montagehaken reicht.

8. Montagesystem zur Montage eines Solarpaneels auf einem Schrägdach mit Dachziegeln auf horizontalen Dachlatten in einer Schindelanordnung, wobei das Montagesystem zwei oder mehr Montagehaken gemäß einem der vorhergehenden Ansprüche umfasst.

9. Montagesystem nach Anspruch 8, umfassend mindestens vier Montagehaken nach einem der Ansprüche 5 bis 7 zum Montieren einer Folge von mindestens zwei Paneelen in einer First-zur-Traufe-Richtung, wobei die mindestens vier Montagehaken jeweilige Verbindungsmittel zum Verbinden jedes Paars von in der First-zur-Traufe-Richtung benachbarten Montagehaken umfassen.

10. Montagesystem nach Anspruch 8 oder 9, ferner umfassend einen traufseitigen Endhaken (1800), der die gleiche Breite und Dicke wie der Montagehaken aufweist und einen Lattenhakenabschnitt (1802) umfasst, der in gleicher Weise wie der Lattenhakenabschnitt (102) des Montagehakens (100) nach Anspruch 1 ausgelegt ist und der sich in ein einstückig ausgebildetes firstseitiges Verbindungsmittel (1804) fortsetzt, um den Endhaken (1800) an einem nächst benachbarten, in firstseitiger Richtung anzuordnenden Montagehaken (100) zu befestigen.

11. Dachanordnung (1000) umfassend
- ein Schrägdach mit Dachziegeln (502, 532), die in einer schindelartigen Anordnung auf einer Vielzahl von parallelen, horizontalen Dachlatten (506) angeordnet sind;
- mindestens ein Solarpaneel (910, 912), das mit einem Montagesystem nach einem der Ansprüche 8 bis 10 auf dem Dach unter Benutzung von mindestens zwei der Montagehaken montiert ist , wobei
der Lattenhakenabschnitt jedes Montagehakens mit seinem Durchgangsabschnitt durch einen Überlappungsbereich zwischen einem jeweiligen traufseitigen Dachziegel und einem jeweiligen firstseitigen Dachziegel verläuft, der den traufseitigen Dachziegel in ihrer geschindelten Anordnung überlappt; und wobei
der Hakenabschnitt in Fortsetzung des Durchgangsabschnitts jedes Montagehakens um eine firstseitige Kante des jeweiligen traufseitigen Dachziegels und um eine firstseitige Hinterkante der jeweiligen Dachlatte greift, die zum Montieren des traufseitigen Dachziegels verwendet wird.

12. Verfahren zum Installieren eines Montagehakens (100) nach einem der Ansprüche 1 bis 7 auf einem Schrägdach mit Dachziegeln auf horizontalen Dachlatten (536) in einer Schindelanordnung, wobei das Verfahren umfasst
- Auswählen eines Paares sich überlappender Dachziegel, das von einem traufseitigen Dachziegel (502) und einem firstseitigen Dachziegel (532) gebildet wird, zur Installation des Montagehakens;
- Anheben einer traufseitigen Kante (534) des firstseitigen Dachziegels (532) von dem traufseitigen Dachziegels (502);
- Drehen des Montagehakens (100) zur Seite und Durchführen des Lattenhakenabschnitts (102) des Montagehakens unter den angehobenen firstseitigen Dachziegel (532) und über den traufseitigen Dachziegel (502);
- nachfolgendes Zurückdrehen des Montagehakens (100) zur Seite und Ziehen dessen zur Traufe, wodurch der Montagehaken durch Umgreifen einer firstseitigen Kante des traufseitigen Dachziegels und Umgreifen einer firstseitigen Hinterkante der zum Montieren des traufseitigen Dachziegels verwendeten Dachlatte in Eingriff genommen wird.

13. Verfahren zum Installieren eines Solarpaneels auf einem Schrägdach mit Dachziegeln auf horizontalen Dachlatten in einer Schindelanordnung, wobei das Verfahren umfasst
- Installieren von mindestens zwei Befestigungshaken unter Benutzung des Verfahrens des Anspruchs 12, um dieselbe Dachlatte in einem gegenseitigen horizontalen Abstand zu umfassen, der kleiner als eine seitliche Ausdehnung des zu montierenden Solarpaneels ist,
- Montieren des Solarpaneels in den Paneelmontageabschnitten der beiden Montagehaken.

## Revendications

1. Crochet de montage (100) destiné à être utilisé pour monter un panneau solaire sur un toit en pente comportant des tuiles (502, 532) sur des liteaux de toit horizontaux (502) dans un agencement en bardeaux, le crochet de montage comprenant :
- une partie crochet de liteau côté faîtage (102) et une partie de montage de panneau solaire côté avant-toit (112) ; dans lequel
- la partie crochet de liteau (102) comprend
une partie de passage (104) constituée d'un profilé plat (L1), destinée à passer, après installation sur le toit en tuiles, à travers une zone de chevauchement entre une tuile côté avant-toit (502) et une tuile côté faîtage (532) chevauchant la tuile côté avant-toit (502) dans leur disposition en bardeaux ; et
une partie crochet (106) dans le prolongement côté faîtage de la partie de passage (104), la partie crochet ayant une forme étagée pour s'agripper autour d'un bord côté faîtage (504) de la tuile côté avant-toit (502) et pour s'agripper autour d'un bord arrière côté faîtage (508) du liteau de toit (502) utilisé pour monter la tuile côté avant-toit (502), dans lequel
la partie de montage du panneau solaire (112) comprend une pince côté faîtage (114) pour saisir un bord côté faîtage du panneau solaire (912) à monter, et une pince côté avant-toit (116) disposée à distance de la pince côté faîtage dans une direction faîtage-avant-toit, pour saisir et soutenir un bord côté avant-toit du panneau solaire (912) à monter, et dans lequel
au moins une partie côté faîtage de la partie de montage du panneau solaire (112), y compris la pince côté faîtage et la partie crochet de liteau (102), sont formées d'une seule pièce en tant que première pièce formée en une seule pièce, et une partie côté avant-toit de la partie de montage du panneau solaire, y compris la pince côté avant-toit et une poutre, sont formées comme une deuxième pièce formée en une seule pièce, ou
le crochet de montage est formé en une seule pièce comme une pièce en forme de bande.

2. Le crochet de montage de la revendication 1, dans lequel
- la partie crochet de liteau (102) comprend une partie en forme de L (L) comprenant une longue barre en L (L1) et une courte barre en L (L2), cette dernière étant reliée à une première barre en Z (Z1) d'une partie en forme de Z (Z) qui comprend en outre une deuxième barre en Z (Z2) et une barre en Z médiane (Z3) reliant les première et deuxième barres en Z, et dans lequel
- la partie de passage comprend (104) la longue barre en L (L1),
- une partie de préhension de tuile (107) de la partie crochet (106) est formée par la barre en L courte (L2) et la première barre en Z (Z1) qui s'étend à l'opposé de la partie de passage (104) à partir d'une extrémité de la barre en L courte (L2), et dans lequel
- une partie de préhension de liteau (109) est formée par la barre en Z médiane (Z3) et la deuxième barre en Z horizontale (Z2) qui s'étend à l'opposé de la partie de passage (104) à partir d'une extrémité de la barre en Z médiane (Z3).

3. Le crochet de montage (100) selon l'une quelconque des revendications précédentes, dans lequel la partie de montage du panneau solaire comprend une face de support avant (118) qui fait face au panneau solaire à monter et qui est supportée par au moins une entretoise (120), qui s'étend sur un côté arrière (122) de la partie de montage du panneau solaire (112) pour établir une élévation du panneau solaire (912) à monter à partir d'une tuile de toit de support.

4. Le crochet de montage (300) selon l'une quelconque des revendications précédentes, dans lequel la partie de montage du panneau solaire (312) comprend un moyen de connexion côté avant-toit (326) formé d'une seule pièce qui est disposé près de la pince côté avant-toit (316), pour fixer le crochet de montage (300) à une position adaptable dans la direction avant-toit-à-faîtage (ETR) à un crochet de montage voisin suivant à disposer dans la direction faîtage-à-avant-toit (RTE).

5. Le crochet de montage (300) selon la revendication 4, dans lequel la partie de montage du panneau solaire comprend en outre un moyen de connexion côté faîtage (330) formé en une seule pièce près de la pince côté faîtage (314), pour fixer le crochet de montage (300) à un crochet de montage voisin suivant à disposer dans la direction avant-toit-à-faîtage (ETR).

6. Le crochet de montage de la revendication 5, dans lequel le moyen de connexion côté faîtage (330) comprend des rails formés en une seule pièce (332) s'étendant dans une direction verticale (V) pointant d'une tuile de toit à supporter vers le panneau à monter, et formés pour s'engager avec un coulisseau d'un clip de montage, et une séquence de bords s'étendant parallèlement au panneau à monter à différentes distances verticales de celui-ci, sur ou dans une face côté faîtage de la partie de montage du panneau, pour s'engager avec un clip de montage à une distance adaptable du panneau.

7. Le crochet de montage de l'une quelconque des revendications précédentes, dans lequel la partie de montage du panneau comprend un alésage s'étendant, près de la pince côté avant-toit, depuis sa face de support avant à travers son côté arrière, pour recevoir un moyen de fixation qui passe à travers l'alésage et dans un crochet de montage voisin suivant à disposer dans la direction côté avant-toit.

8. Système de montage pour monter un panneau solaire sur un toit en pente ayant des tuiles sur des liteaux de toit horizontales dans un arrangement en bardeaux, le système de montage comprenant deux ou plusieurs crochets de montage selon l'une quelconque des revendications précédentes.

9. Système de montage selon la revendication 8, comprenant au moins quatre crochets de montage selon l'une des revendications 5 à 7 pour monter une séquence d'au moins deux panneaux dans une direction faîtage-à-avant-toit, les au moins quatre crochets de montage comprenant des moyens de connexion respectifs pour connecter chaque paire de crochets de montage voisins dans la direction faîtage-à-avant-toit.

10. Système de montage selon la revendication 8 ou 9, comprenant en outre un crochet d'extrémité côté avant-toit (1800) ayant la même largeur et la même épaisseur que le crochet de montage et comprenant une partie de crochet de liteau (1802) qui est configurée de la même manière que la partie de crochet de liteau (102) du crochet de montage (100) selon la revendication 1 et qui se prolonge en un moyen de connexion côté faîtage (1804) formé d'une seule pièce, pour fixer le crochet d'extrémité (1800) à un crochet de montage voisin suivant (100) à disposer dans la direction côté faîtage.

11. Un agencement de toit (1 000), comprenant :
- un toit en pente comportant des tuiles (502, 532) disposées en bardeaux sur une pluralité de liteaux de toit horizontales parallèles (506) ;
- au moins un panneau solaire (910, 912) monté sur le toit par un système de montage selon l'une des revendications 8 à 10, dans lequel chaque panneau est monté à l'aide d'au moins deux des crochets de montage, dans lequel
la partie crochet de liteau de chaque crochet de montage passe avec sa partie passante à travers une zone de chevauchement entre une tuile respective côté avant-toit et une tuile respective côté faîtage chevauchant la tuile côté avant-toit dans leur disposition en bardeaux ; et dans lequel
la partie crochet dans le prolongement de la partie passante de chaque crochet de montage s'agrippe autour d'un bord côté faîtage de la tuile côté avant-toit respective et autour d'un bord arrière côté faîtage du liteau de toit respectif utilisé pour monter la tuile côté avant-toit.

12. Procédé d'installation d'un crochet de montage (100) selon l'une quelconque des revendications 1 à 7 sur un toit en pente ayant des tuiles sur des liteaux de toit horizontaux (536) dans un arrangement en bardeaux, le procédé comprenant les étapes consistant à :
- sélectionner une paire de tuiles de toit se chevauchant formées par une tuile de toit côté avant-toit (502) et par une tuile de toit côté faîtage (532) pour l'installation du crochet de montage ;
- soulever un bord côté avant-toit (534) de la tuile côté faîtage (532) de la tuile côté avant-toit (502) ;
- tourner le crochet de montage (100) sur le côté et faire passer la partie crochet de liteau (102) du crochet de montage sous la tuile côté faîtage soulevée (532) et sur la tuile côté avant-toit (502) ;
- tourner ensuite le crochet de montage (100) vers l'arrière et le tirer vers l'avant-toit, en engageant ainsi le crochet de montage en le saisissant autour d'un bord côté faîtage de la tuile côté avant-toit et en le saisissant autour d'un bord arrière côté faîtage de ce liteau de toit utilisée pour monter la tuile côté avant-toit.

13. Procédé d'installation d'un panneau solaire sur un toit en pente comportant des tuiles sur des liteaux de toit horizontaux dans un arrangement en bardeaux, le procédé comprenant les étapes consistant à :
- installer, en utilisant le procédé de la revendication 12, au moins deux crochets de montage pour embrasser le même liteau de toit à une distance horizontale mutuelle inférieure à une extension latérale du panneau solaire à monter,
- monter le panneau solaire dans les parties de montage du panneau des deux crochets de montage.
